# EUROPEAN PATENT SPECIFICATION

(11) **EP 3 074 613 B1**
(45) Date of publication and mention of the grant of the patent: **15.09.2021**
(21) Application number: 13898333.3
(22) Date of filing: 26.11.2013
(51) Int. Cl.: F01K 13/00, F01N 5/02, F01K 23/06, F01K 23/10

(54) **SUPPLEMENTAL HEATING IN WASTE HEAT RECOVERY**
ZUSÄTZLICHE ERWÄRMUNG IN EINER ABWÄRMERÜCKGEWINNUNG
CHAUFFAGE SUPPLÉMENTAIRE POUR RÉCUPÉRATION DE CHALEUR PERDUE

(43) Date of publication of application: 05.10.2016
(73) Proprietor: Volvo Truck Corporation, 405 08 Göteborg (SE)
(72) Inventor: GIBBLE, John, Chambersburg, PA 17202 (US)
(74) Representative: Eisenführ Speiser
(86) International application number: PCT/US2013/071900
(87) International publication number: WO 2015/080697

(56) References cited:
- EP-A2- 1 953 350
- WO-A2-2011/005923
- DE-A1-102008 044 441
- US-A1- 2001 042 369
- US-A1- 2011 005 477
- US-A1- 2011 185 742
- US-A1- 2012 047 892
- US-A1- 2012 285 169
- US-A1- 2013 205 776
- US-B1- 6 339 926

## Description

### Field of the invention

The invention relates to bottoming cycle apparatuses, such as Rankine cycle apparatuses, for recovering energy from waste heat of internal combustion engines, and more particularly, to a method and apparatus for ensuring the working fluid is at a temperature sufficient for operation of the waste heat expander.

### Background and Summary

For a bottoming cycle apparatus, such as an apparatus based on the Rankine cycle, system efficiency is related directly to the up-time, that is, the operational time during which recovery of waste heat occurs. Inactive periods are often due to poor quality heat being available (not enough waste heat) or due to component warm-up time (when boilers and expansion machines are warming up). For example, a waste heat recovery apparatus connected to a truck engine may be inactive immediately after the engine is started and is warming up.

US 2011/005477 discloses according to its abstract: A waste heat recovering device capable of recovering waste heat with good efficiency from various heat sources in an internal combustion engine. The waste heat recovering device for driving an expander by evaporating a working fluid by waste heat of an internal combustion engine includes: a working fluid circulation flow path in which the working fluid of the expander is caused to circulate; a high-temperature heat exchanger for heating the working fluid flowing in the working fluid circulation flow path by a high-temperature fluid such as exhaust gas of the internal combustion engine; a low-temperature heat exchanger group having, for each of low-temperature fluids such as cooling water and oil of the internal combustion engine, a low-temperature heat exchanger for heating the working fluid flowing in the working fluid circulation flow path by any one of the low-temperature fluids, the low-temperature heat exchangers being disposed in parallel with each other; a flow rate control valve that controls a flow rate of the working fluid flowing into each low-temperature heat exchanger of the low-temperature heat exchanger group; and control means for controlling the flow rate control valve.

US 2012/285169 discloses according to its abstract: A waste heat recovery system for recovering heat from a number of turbocharger stages. The waste heat recovery system may include a simple organic rankine cycle system and a number of charge air coolers in communication with the turbocharger stages and the simple organic rankine cycle system. The charge air coolers are positioned in a number of parallel branches of the simple organic rankine cycle system.

The invention proposes a solution to increase operational time by improving thermal management during periods of poor quality heat availability and to decrease the warm up time of the apparatus when returning to operation.

The invention is applicable to bottoming cycles such as the Rankine cycle, the Ericsson cycle and other waste heat recuperating cycles.

A bottoming cycle apparatus may include an expansion machine connected in a working fluid circuit to receive working fluid from a waste heat recovery heat exchanger, such as a boiler, vaporizer, or heat exchanger. The working fluid directed to an expansion machine is expanded in the expansion machine to generate usable work or energy.

According to the invention, a heating arrangement operatively connected on the working fluid circuit provides supplemental heat to the working fluid when the waste heat recovered by the waste heat recovery heat exchanger is not sufficient to raise the working fluid enthalpy to a working level for the expander.

The heating arrangement includes a burner or an electrical heating device arranged with a heat exchanger to heat the working fluid. A burner may include a source of fuel, for example, a hydrocarbon fuel such as diesel. An electrical heating device may be connected to receive electrical energy from a source such as a vehicle electrical supply system.

A controller may be connected to control operation of the heating device and connected monitor temperature and pressure of the working fluid (which may be measured at the outlet of the boiler).

The heating arrangement may be positioned on the working fluid circuit between the boiler and the expander. Alternatively, the heating arrangement may be positioned on the working fluid circuit between the pump and the boiler.

According to yet another alternative, the heating arrangement may be positioned on the boiler to add heat to the waste heat source flow. For example, if the boiler is connected to receive a flow of engine exhaust gas as the waste heat source, the supplemental heating arrangement may be disposed to add heat to the exhaust gas as it enters the boiler.

According to the invention, the working fluid circuit may include a heating loop on which the supplemental heating arrangement is disposed, the heating loop controlled by a valve, the valve directing working fluid directly to the expander or to the heating loop before entry in the expander responsive to the heat quality of the working fluid.

According to yet another aspect, the working fluid circuit may include a bypass circuit around the expansion machine through which working fluid is directed when the heat quality is low or when operation of the expander is not desired.

According to an embodiment, the bypass circuit may include a first loop, or heating loop, on which the supplemental heating arrangement may be disposed and which returns working fluid to the expander and a second loop that directs working fluid from the first loop to bypass the expander.

### Brief Description of the Drawings

Figure 1 is a schematic view of a typical Rankine cycle apparatus according the prior art.
Figure 2 is a schematic view of a Rankine cycle apparatus having a bypass circuit to allow working fluid to bypass the expansion machine.
Figure 3 is a schematic view of a bottoming cycle apparatus according to an embodiment of the invention in which a supplemental heating arrangement is provided to selectively add heat to the working fluid.
Figure 4 is a schematic view of an alternative embodiment of the apparatus of Figure 3 including a bypass circuit around the expansion machine.
Figure 5 is a schematic view of another alternative embodiment of the apparatus of Figure 3, including a first bypass circuit on which a supplemental heating arrangement is provided and a second bypass circuit around the expansion machine.
Figure 6 is a schematic view of a bottoming cycle apparatus according to an alternative embodiment in which the heating arrangement is provided upstream of the boiler.
Figure 7 is a schematic view of a bottoming cycle apparatus according to yet an alternative embodiment in which the heating arrangement is provided on the waste heat inlet to the boiler.

### Detailed Description

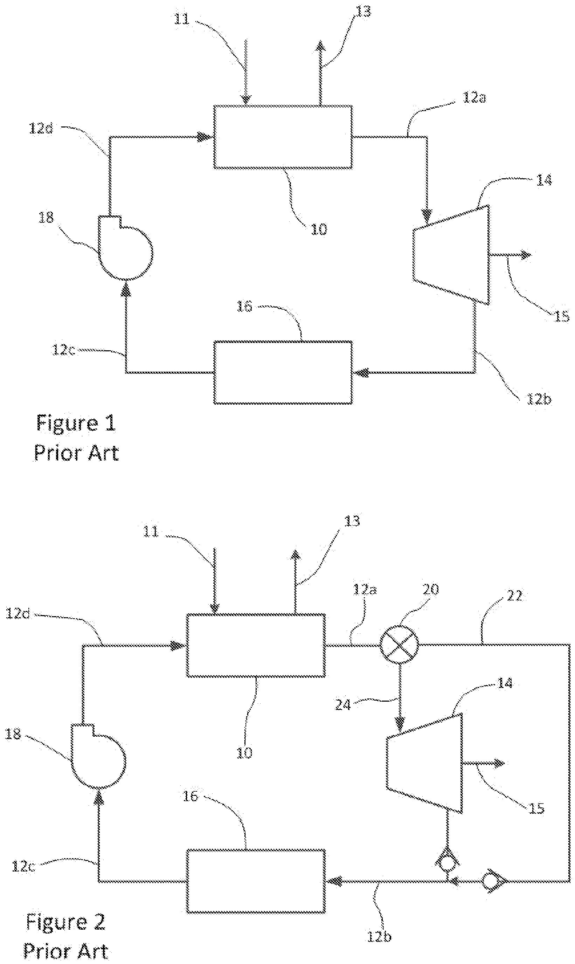

As seen in Figure 1, a typical bottoming cycle waste heat recovery apparatus includes a vaporizer or boiler 10 to recover heat from a heat source (not illustrated), such as waste heat from an internal combustion engine exhaust, engine coolant, engine oil cooler, or other source, to heat a working fluid. An inflow line 11 at a boiler inlet conducts the waste heat-carrying medium (e.g., exhaust gas) into the boiler 10 and an outflow line 13 carries the medium out after heat exchange from the boiler outlet. Working fluid is carried through the waste heat recovery apparatus by a working fluid circuit 12. The heated working fluid exiting the boiler 10 is directed through a working fluid circuit line 12a to an expansion machine or expander 14, which generates work by expanding the working fluid. The expander may be a turbine, a piston engine, a scroll, a screw, or other machine. The generated work may be transmitted through a shaft 15, and may be used, for example, to drive an electrical generator or as mechanical power added to the drive shaft of the internal combustion engine. Expanded working fluid is directed through the circuit line 12b to a condenser 16, which removes residual heat from and condenses the working fluid. The condensed fluid is then directed through a circuit line 12c to a pump 18, which compresses the working fluid. A circuit line 12c carries the working fluid from the pump 18 to the boiler 10 to repeat the waste heat recovery cycle.

As seen in Figure 2, and as known in the art, a bottoming cycle waste heat apparatus may include a bypass valve 20 and bypass circuit 22 to selectively direct working fluid around the expander 14 to the condenser 16. The bypass valve 20 may be controlled to direct the working fluid to the expander 14 through line 24 when the working fluid is at operational condition, or through line 22 to bypass the expander 14 when power generation by the expander is not desired or when the quality of the working fluid is not sufficient for expansion. The quality of the working fluid may not be sufficient when there is not enough waste heat available at the boiler 10 to heat the working fluid to an operational temperature, for example, as superheated steam. The condenser 16 cools the working fluid received from the bypass circuit and the cooled fluid is pumped by the pump 18 to the vaporizer/boiler 10.

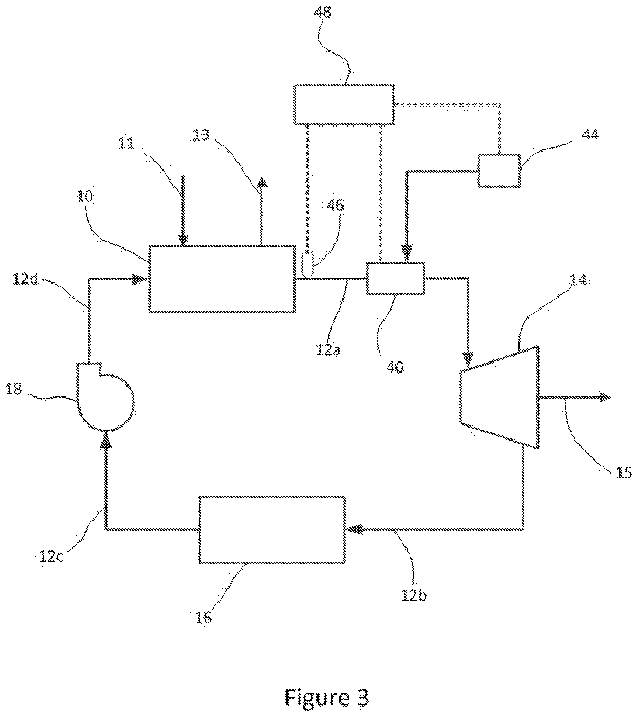

Figure 3 illustrates an embodiment of an apparatus according to the invention. The apparatus of Figure 3 includes a heating arrangement 40 operatively connected on the working fluid circuit 12 to provide supplemental heat to the working fluid. The heating arrangement 40 is illustrated as connected between the vaporizer 10 and the expander 14. When the heat recovered by the vaporizer 10 and transferred to the working fluid is not sufficient for use in the expander 14, the heating arrangement 40 may be operated to add supplemental heat to the working fluid.

The heating arrangement 40 is configured as a heat exchanger with heat being supplied by a burner or electric heating device.

The heating arrangement 40 is connected to receive energy from an energy source 44. The heating arrangement 40 may be a burner arrangement and the energy source 44 may be a hydrocarbon fuel. The fuel conveniently may be the same fuel as is used by an engine generating the waste heat. The heating arrangement 40 may alternatively be an electrical heater and the energy source configured as an electrical energy source. For example, if the waste heat recovery apparatus is associated with a truck, the truck's electrical system may be connected as the energy source. Other heating arrangements may be used.

The heating arrangement 40 may be operated based on a sensed temperature of the working fluid exiting the boiler 10. A temperature sensor 46 at the outlet of the boiler 10, or on the working fluid circuit 12a on the outlet side of the boiler, may be connected to provide a temperature signal to a controller 48, which is connected to control the heating arrangement 40 and the energy source 44 responsive to the temperature signal from sensor 46.

The heating arrangement 40 may also be controlled based on other operational conditions, such as pressure of the working fluid. In addition, a temperature sensor 62 on the outlet side of the expander (or at the inlet of the condenser) can monitor temperature of the exiting, expanded working fluid and provide a signal the controller 48.

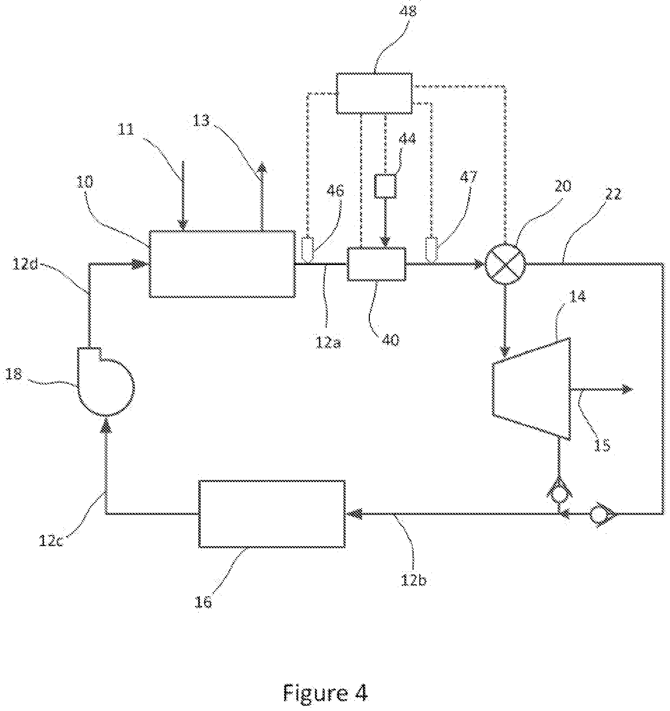

Figure 4 is a schematic view of an alternative embodiment the apparatus of Figure 3. A bypass valve 20 is provided to direct working fluid through a bypass circuit 22 to bypass the expansion machine 14 when the heat quality is not sufficient for expansion. The bypass valve 20 is controlled to direct working fluid to the expansion machine 14 when the heat quality of the working fluid, from recovered waste heat from the boiler 10, from supplemental heat from the heating arrangement 40, or from both, is sufficient for expansion. The bypass valve 20 is controlled by the controller 48 responsive to conditions including the temperature of the working fluid measured by sensor 46 at the outlet side of the boiler and/or by sensor 47 at the outlet side of the heating arrangement 40.

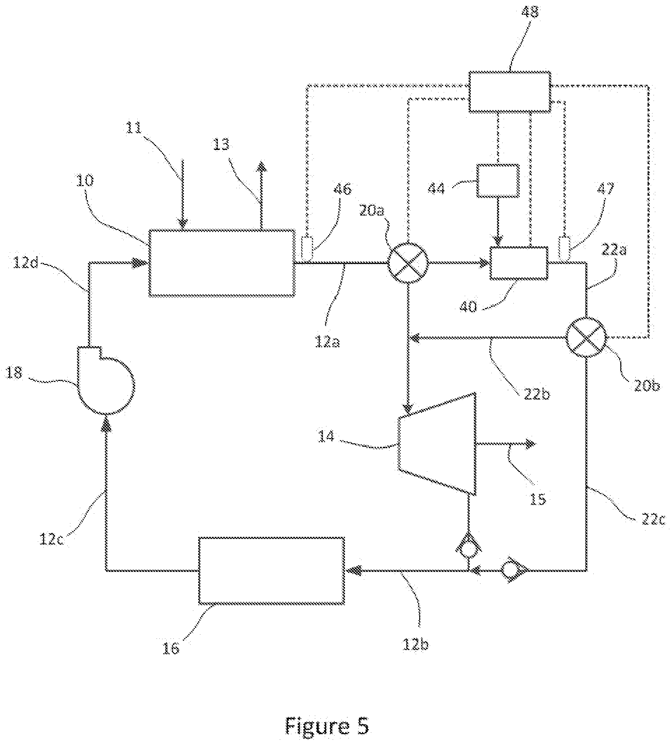

Figure 5 shows another alternative embodiment that includes a first bypass valve 20a to direct working fluid to the expansion machine 14 if the heat quality of the working fluid flowing from the boiler 10 is of sufficient quality or, if supplemental heating is required, to a first bypass circuit 22a on which a supplemental heating arrangement 40 is disposed. A second bypass valve 20b is downstream of the heating arrangement 40 and directs working fluid through circuit 22b to the expansion machine 14 if the heat quality of the working fluid is sufficient for expansion, thus completing the first bypass circuit. The second bypass valve 20b directs working fluid through a second bypass circuit 22c if the heat quality of the working fluid is not sufficient for expansion. The first bypass valve 20a and second bypass valve 20b are controlled by controller 48 responsive to operating conditions, including the temperature of the working fluid as measured by sensor 46 on the outlet side of the boiler 10 and the sensor 47 on the outlet side of the heating arrangement 40.

According to an alternative embodiment of Figure 5, the second bypass valve 20b and second bypass circuit 22c are omitted and the first bypass valve 20a, bypass circuit 22a, and heating arrangement 40 comprise a heating loop. The bypass valve 20a is controlled to direct working fluid directly to the expander or to the heating loop for supplemental heating prior to the working fluid being directed to the expander.

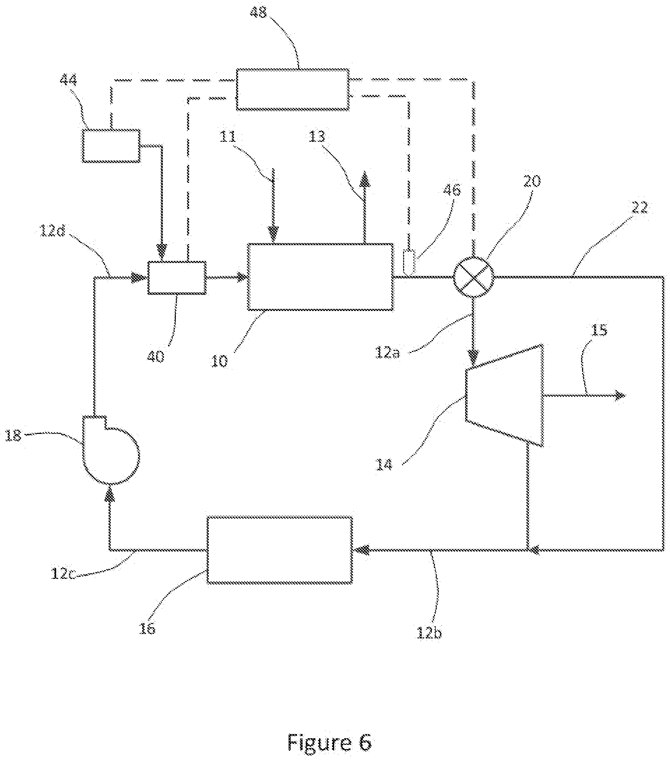

Figure 6 is a schematic of an alternative embodiment. The heating arrangement 40 may be connected to the working fluid circuit 12 on the inlet side of the boiler 10, between the pump 18 and the boiler 10. A bypass valve 20 and bypass circuit 22 may also be provided to direct working fluid to bypass the expander if operation of the expander is not desired or if the quality of the working fluid is not sufficient for expansion.

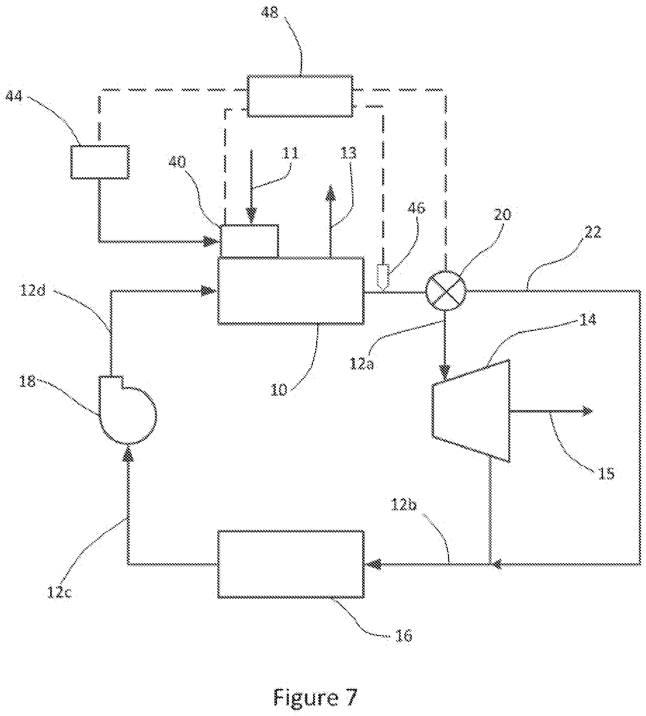

Figure 7 is a schematic of another alternative arrangement, in which the heating arrangement 40 is connected on the waste heat inlet line 11 of the boiler 10. A bypass valve 20 and bypass circuit 22 may also be provided as in the other embodiments.

## Claims

1. A waste heat recovery apparatus for recovering energy from waste heat of an internal combustion engine, comprising: a working fluid circuit (12a, 12b, 12c, 12d) to circulate working fluid; a boiler (10) connected on the working fluid circuit (12a, 12b, 12c, 12d) and adapted to recover waste heat from a source and transfer recovered waste heat to the working fluid; an expander (14) connected on the working fluid circuit (12a, 12b, 12c, 12d) to receive working fluid from the boiler (10); and, a supplemental heating arrangement (40) **characterised in that** the supplemental heating arrangement (40) includes one of a burner or an electric heating device connected to deliver heat to the working fluid.

2. The waste heat recovery apparatus of claim 1, comprising: a temperature sensor (46) disposed to sense a temperature of the working fluid at an exit of the boiler (10) and generate a temperature signal representative thereof; and, a controller (48) connected to receive the temperature signal from the temperature sensor (46) and connected to control the heating arrangement (40) responsive to the temperature signal.

3. The waste heat recovery apparatus of claim 1, comprising an energy source (44) connected to deliver energy to the heating arrangement (40).

4. The waste heat recovery apparatus of claim 1, wherein, the supplemental heating arrangement (40) is connected to the working fluid circuit (12a, 12b, 12c, 12d) between the boiler (10) and the expander (14).

5. The waste heat recovery apparatus of claim 1, wherein, the supplemental heating arrangement (40) is connected to the working fluid circuit (12a, 12b, 12c, 12d) between a pump (18) and the boiler (10).

6. The waste heat recovery apparatus of claim 1, wherein, the supplemental heating arrangement (40) is connected to deliver heat to the boiler (10).

7. The waste heat recovery apparatus of claim 1, comprising: a temperature sensor (47) disposed to sense a temperature of the working fluid at an exit of the supplemental heating arrangement (40) and generate a temperature signal representative thereof; and, a controller (48) connected to receive the temperature signal from the temperature sensor (47) and connected to control the heating arrangement (40) responsive to the temperature signal.

8. The waste heat recovery apparatus of claim 1, comprising a bypass valve (20, 20a) and bypass circuit (22) connected on the working fluid circuit (12a, 12b, 12c, 12d) to selectively direct working fluid to bypass the expander (14).

9. The waste heat recovery apparatus of claim 8, wherein the supplemental heating arrangement (40) is connected in the working fluid circuit between the boiler (10) and the bypass valve (20, 20a).

10. The waste heat recovery apparatus of claim 8, comprising a second bypass valve (20b), the bypass circuit comprising a first circuit (22a) wherein working fluid is directed by the bypass valve (20a) to the second bypass valve (20b) then by the second bypass valve (20b) to the expander (14) and a second bypass circuit (22c) wherein working fluid is directed by the bypass valve (20a) to the second bypass valve (20b) then by the second bypass valve (20b) to bypass the expander (14).

11. The waste heat recovery apparatus of claim 10, wherein the supplemental heating arrangement (40) is disposed on the first circuit (22a).

12. The waste heat recovery apparatus of claim 1, comprising a valve (20, 20a) connected on the working fluid circuit (12a, 12b, 12c, 12d) to selectively direct working fluid to one of the expander (14) or to a heating loop, wherein the supplemental heating arrangement (40) is disposed on the heating loop.

## Patentansprüche

1. Abwärmerückgewinnungsvorrichtung zur Rückgewinnung von Energie aus der Abwärme eines Verbrennungsmotors, umfassend: einen Arbeitsfluidkreislauf (12a, 12b, 12c, 12d), der ein Arbeitsfluid zirkulieren lässt; einen Kessel (10), der an den Arbeitsfluidkreislauf (12a, 12b, 12c, 12d) angeschlossen ist und geeignet ist, Abwärme von einer Quelle zurückzugewinnen und die zurückgewonnene Abwärme auf das Arbeitsfluid zu übertragen; ein Expander (14), der an den Arbeitsfluidkreislauf (12a, 12b, 12c, 12d) zur Aufnahme von Arbeitsfluid aus dem Kessel (10) angeschlossen ist; und, eine zusätzliche Heizanlage (40)
**dadurch gekennzeichnet, dass** die zusätzliche Heizanlage (40) Folgendes umfasst: einen Brenner oder ein elektrisches Heizgerät, der/das angeschlossen ist, um dem Arbeitsfluid Wärme zuzuführen.

2. Abwärmerückgewinnungsvorrichtung nach Anspruch 1, die Folgendes umfasst: einen Temperatursensor (46), der so angeordnet ist, dass er eine Temperatur des Arbeitsfluids an einem Ausgang des Kessels (10) erfasst und ein dafür repräsentatives Temperatursignal erzeugt; und ein Steuergerät (48), das zum Empfang des Temperatursignals vom Temperatursensor (46) und der verbunden ist zur Steuerung der Heizanlage (40), in Abhängigkeit des Temperatursignals.

3. Abwärmerückgewinnungsvorrichtung nach Anspruch 1, die eine Energiequelle umfasst (44), die angeschlossen ist, um Energie an die Heizanlage (40) zu liefern.

4. Abwärmerückgewinnungsvorrichtung nach Anspruch 1, wobei die Heizanlage (40) mit dem Arbeitsfluidkreislauf (12a, 12b, 12c, 12d) zwischen dem Kessel (10) und dem Expander (14) verbunden ist.

5. Abwärmerückgewinnungsanlage nach Anspruch 1, wobei die Heizanlage (40) mit dem Arbeitsfluidkreislauf (12a, 12b, 12c, 12d) zwischen einer Pumpe (18) und dem Kessel (10) verbunden ist.

6. Abwärmerückgewinnungsvorrichtung nach Anspruch 1, wobei die Heizanlage (40) so angeschlossen ist, dass sie dem Heizkessel (10) Wärme zuführt.

7. Abwärmerückgewinnungsvorrichtung nach Anspruch 1, umfassend: einen Temperatursensor (47), der angeordnet ist, um die Temperatur der Arbeitsfluids am Ausgang der zusätzlichen Heizanlage (40) zu erfassen und ein dafür repräsentatives Temperatursignal erzeugen; und ein Steuergerät (48), das angeschlossen ist, um das Temperatursignal vom Temperatursensor (47) zu empfangen und angeschlossen ist zur Steuerung der Heizanlage (40) in Abhängigkeit des Temperatursignals.

8. Abwärmerückgewinnungsvorrichtung nach Anspruch 1, umfassend ein Bypassventil (20, 20a) und einen Bypass-Kreislauf (22), der an den Arbeitsfluidkreislauf (12a, 12b, 12c, 12d) angeschlossen ist, um das Arbeitsfluid selektiv zu leiten, um den Expander (14) zu umgehen.

9. Abwärmerückgewinnungsvorrichtung nach Anspruch 8, wobei die zusätzliche Heizanlage (40) in den Arbeitsfluidkreislauf zwischen dem Kessel (10) und dem Bypassventil (20, 20a) angeschlossen ist.

10. Abwärmerückgewinnungsvorrichtung nach Anspruch 8, mit einem zweiten Bypassventil (20b), wobei der Bypasskreislauf einen ersten Kreislauf (22a) umfasst wobei das Arbeitsfluid durch das Bypassventil (20a) zu dem zweiten Bypassventil (20b) und dann durch das zweite Bypassventil (20b) zu dem Expander (14) und einem zweiten Bypasskreislauf (22c) geleitet wird wobei das Arbeitsfluid durch das Bypassventil (20a) zum zweiten Bypass-ventil (20b) und dann über das zweite Bypass-Ventil (20b) geleitet wird zur Umgehung des Expanders (14).

11. Abwärmerückgewinnungsvorrichtung nach Anspruch 10, wobei die zusätzliche Heizanlage (40) im ersten Kreislauf (22a) angeordnet ist.

12. Abwärmerückgewinnungsvorrichtung nach Anspruch 1, mit einem Ventil (20, 20a), das an den Arbeitsfluidkreislauf (12a, 12b, 12c, 12d) angeschlossen ist, um das Arbeitsmedium selektiv zu dem Expander (14) oder zu einer Heizschleife zu leiten, wobei die zusätzliche Heizanlage (40) auf der Heizschleife angeordnet ist.

## Revendications

1. Appareil de récupération de chaleur perdue pour récupérer de l'énergie de la chaleur perdue d'un moteur à combustion interne, comprenant :
un circuit de fluide actif (12a, 12b, 12c, 12d) pour faire circuler un fluide actif ;
une chaudière (10) raccordée sur le circuit de fluide actif (12a, 12b, 12c, 12d) et adaptée pour récupérer la chaleur perdue d'une source et transférer la chaleur perdue récupérée au fluide actif ; un détendeur (14) raccordé sur le circuit de fluide actif (12a, 12b, 12c, 12d) pour recevoir le fluide actif à partir de la chaudière (10) ; et un agencement de chauffage supplémentaire (40),
**caractérisé en ce que** l'agencement de chauffage supplémentaire (40) comporte l'un d'un brûleur et d'un dispositif de chauffage électrique raccordé pour fournir de la chaleur au fluide actif.

2. Appareil de récupération de chaleur perdue de la revendication 1, comprenant : un capteur de température (46) disposé pour détecter une température du fluide actif à une sortie de la chaudière (10) et générer un signal de température représentant celle-ci ; et une unité de commande (48) raccordée pour recevoir le signal de température à partir du capteur de température (46) et raccordée pour commander l'agencement de chauffage (40) en réponse au signal de température.

3. Appareil de récupération de chaleur perdue de la revendication 1, comprenant une source d'énergie (44) raccordée pour fournir de l'énergie à l'agencement de chauffage (40).

4. Appareil de récupération de chaleur perdue de la revendication 1, dans lequel l'agencement de chauffage supplémentaire (40) est raccordé au circuit de fluide actif (12a, 12b, 12c, 12d) entre la chaudière (10) et le détendeur (14).

5. Appareil de récupération de chaleur perdue de la revendication 1, dans lequel l'agencement de chauffage supplémentaire (40) est raccordé au circuit de fluide actif (12a, 12b, 12c, 12d) entre une pompe (18) et la chaudière (10).

6. Appareil de récupération de chaleur perdue de la revendication 1, dans lequel l'agencement de chauffage supplémentaire (40) est raccordé pour fournir de la chaleur à la chaudière (10).

7. Appareil de récupération de chaleur perdue de la revendication 1, comprenant : un capteur de température (47) disposé pour détecter une température du fluide actif à une sortie de l'agencement de chauffage supplémentaire (40) et générer un signal de température représentant celle-ci ; et une unité de commande (48) raccordée pour recevoir le signal de température à partir du capteur de température (47) et raccordée pour commander l'agencement de chauffage (40) en réponse au signal de température.

8. Appareil de récupération de chaleur perdue de la revendication 1, comprenant une soupape de dérivation (20, 20a) et un circuit de dérivation (22) raccordés sur le circuit de fluide actif (12a, 12b, 12c, 12d) pour diriger sélectivement le fluide actif pour contourner le détendeur (14).

9. Appareil de récupération de chaleur perdue de la revendication 8, dans lequel l'agencement de chauffage supplémentaire (40) est raccordé dans le circuit de fluide actif entre la chaudière (10) et la soupape de dérivation (20, 20a).

10. Appareil de récupération de chaleur perdue de la revendication 8, comprenant une deuxième soupape de dérivation (20b), le circuit de dérivation comprenant un premier circuit (22a) dans lequel le fluide actif est dirigé par la soupape de dérivation (20a) vers la deuxième soupape de dérivation (20b) puis par la deuxième soupape de dérivation (20b) vers le détendeur (14), et un deuxième circuit de dérivation (22c) dans lequel le fluide actif est dirigé par la soupape de dérivation (20a) vers la deuxième soupape de dérivation (20b) puis par la deuxième soupape de dérivation (20b) pour contourner le détendeur (14).

11. Appareil de récupération de chaleur perdue de la revendication 10, dans lequel l'agencement de chauffage supplémentaire (40) est disposé sur le premier circuit (22a).

12. Appareil de récupération de chaleur perdue de la revendication 1, comprenant une soupape (20, 20a) raccordée sur le circuit de fluide actif (12a, 12b, 12c, 12d) pour diriger sélectivement le fluide actif vers l'un(e) du détendeur (14) et d'une boucle de chauffage, dans lequel l'agencement de chauffage supplémentaire (40) est disposé sur la boucle de chauffage.
